# EUROPÄISCHE PATENTSCHRIFT

(11) **EP 0 492 466 B1**
(45) Veröffentlichungstag und Bekanntmachung des Hinweises auf die Patenterteilung: **03.08.1994**
(21) Anmeldenummer: 91121848.5
(22) Anmeldetag: 19.12.1991
(51) Int. Cl.: B60R 13/02

(54) **Als selbsttragende, einstückige Formschale ausgebildete Deckenauskleidung**
Headliner comprising a unitary self-supporting shell
Plafonnier autoportant monobloc

(30) Priorität: 27.12.1990 DE 4041934
(43) Veröffentlichungstag der Anmeldung: 01.07.1992
(73) Patentinhaber: LIGNOTOCK GmbH, D-36205 Sontra (DE)
(72) Erfinder: Nicolay, Albert, Dr., W-3446 Meinhard-Neuerode (DE)
(74) Vertreter: Pfenning, Meinig & Partner

(56) Entgegenhaltungen:
- EP-A- 0 373 135
- DE-A- 3 129 145
- DE-A- 3 621 658

## Beschreibung

Die Erfindung bezieht sich auf eine als selbsttragende, einstückige Formschale ausgebildete Deckenauskleidung, die als Fahrzeughimmel an der Dachkonstruktion der Karosserie eines Personenkraftwagens befestigbar ist gemäß Oberbegriff des Anspruchs 1. Eine solche Deckenaus-Kleidung ist sehon aus dem Dokument DE-A- 3621 658 bekannt.

Derartige Formschalen sind auch beispielsweise aus dem DE-U- 71 14 684 bekannt. Diese bekannte, einige cm dicke Formschale ist aus leichtem Schaumstoff oder Hartschaum-Material gefertigt und soll neben einem wirksamen Insassenschutz bei Unfällen insbesondere auch der Geräuschdämpfung des über die Karosserie abgegebenen Schalls und der Temperaturisolierung dienen. Die Formschale kann in der Dachkonstruktion des Fahrzeuges eingeklemmt werden, aber auch mittels Klebverbindungen mit dem Unterdach des Fahrzeuges dauerhaft verbunden werden. Als Kaschierungen für die bekannte einstückige Formschale dienen sowohl Kunststoff-Folien als auch Bezugsstoffe aller Art.

Auch eine weitere bekannte gepolsterte Innenverkleidung für das Dach eines Fahrzeuges besteht aus Schaumstoff oder einem anderen nachgiebigen Polstermaterial mit einer Abdeckung aus Folie, Kunstleder, Leder oder Textilstoff, wobei diese Innenverkleidung mithilfe von Distanzstücken, wie z.B. materialeinheitlichen angeschäumten oder gesondert angehefteten Rippen, zusammen mit den zum verkleideten Dach hin ausgebildeten Luftkanälen an diesen befestigt ist (DE-A- 15 55 667).

Neben einer ausreichenden Polsterwirkung müssen derartige Fahrzeughimmel nicht nur auch mechanisch stark beanspruchbar sein, sondern insbesondere auch optisch einen möglichst gefälligen Eindruck vermitteln. Freitragende, elastisch nachgiebige Formteile, die solche Deckenauskleidungen bilden, unterstehen weiteren wesentlichen Voraussetzungen, so beispielsweise einer erhöhten Maßstabilität auch bei extremen Feuchtigkeits- oder Temperaturschwankungen. Bei ausreichender Dampfdurchlässigkeit müssen derartige Schalen stets die gewünschte mechanische Stabilität beibehalten, und das bei möglichst geringem Gewicht, d.h. Materialminimierung.

Von derartigen freitragenden, elastisch nachgiebigen Deckenauskleidungen mit einer geeigneten Oberflächenkaschierung ausgehend, liegt der vorliegenden Erfindung die Aufgabe zugrunde, neben der stets verbesserungswürdigen Materialminimierung der Formschale eine erhöhte Biegeflexibilität zu verleihen, so daß sie beispielsweise auch nachträglich durch ein geöffnetes Fenster des Pkw in dessen Fond eingebracht werden kann, sowie eine klebstoffreie Kaschierung der Formschale zu ermöglichen, wobei sie frei von Bindemittelzusätzen aus einem Recycling-fähigen Material bestehen soll. Das Verfahren zur Herstellung derartiger selbsttragender Deckenauskleidungen soll sich durch Einfachheit und geringen Werkzeugeinsatz auszeichnen.

Die Lösung dieser Aufgabe wird erfindungsgemäß für die Deckenauskleidung, die als Fahrzeughimmel in einem Stück montierbar ist, durch die im Kennzeichen des Anspruchs 1 angegebenen Merkmale gelöst. Vorteilhafte Ausgestaltungen dieser Aufgabenlösung des Gegenstandes der Erfindung ergeben sich aus den Unteransprüchen 2 bis 6.

Für das Verfahren zur Herstellung derartiger Deckenauskleidungen löst sich die vorstehend genannte Aufgabe erfindungsgemäß durch die Merkmale des Patentanspruchs 7. Die sich daran anschließenden Unteransprüche zeigen Besonderheiten dieses Verfahrens.

Soweit selbsttragende Formschalen, die als Fahrzeughimmel in Personenkraftwagen Anwendung finden, bisher aus Wirrfaservlies gepreßt wurden, etwa aus einem Lignozellulosefasermaterial, war hier die Zugabe von Bindemitteln zwingend erforderlich. Damit waren Langzeitabdunstungen der nicht lösungsmittelfreien Bindemittelzusätze im Fond des Pkw bisher stets als unvermeidlich hinzunehmen. Die erforderliche Formstabilität der selbsttragenden Schalen verliehen diesen eine nur geringe Biegeflexibilität, so daß sie nur in Neuwagen eingebaut werden konnten bzw. nur dort, wo zumindest die Front- bzw. Heckscheibe vollständig entfernt waren. Größere Feuchtigkeitswerte innerhalb des Fahrzeuges, insbesondere dann, wenn sie über längere Zeiten anwesend waren, führten nicht selten zu derart starken Abmessungsänderungen der freitragenden Schalen, daß diese ausschließlich entlang ihrer Randhalterungen mechanisch angegriffen wurden.

Die erfindungsgemäß ausgebildete selbsttragende, einstückige Formschale weist eine derart erhöhte Biegeflexibilität auf, daß sie beispielsweise auch über die Seitenfenster des Fahrzeuges in dessen Fond eingebracht werden kann. Es hat sich herausgestellt, daß bei der erfindungsgemäß zusammengesetzten Formschale die Maßstabilität auch bei großen Feuchtigkeitsschwankungen und erheblichen Temperaturänderungen stets gewährleistet ist. Die Akustik innerhalb des Fahrzeuges wird durch die außerordentlich dünne Himmelsschale optimiert, was entsprechend auch für ihre Dampfdurchlässigkeit gilt. Infolge der klebstoffreien Kaschierung der Himmelsschale mit geeignetem Kaschierwerkstoff sind die bisher üblichen Langzeitausdünstungen von chemischen Komponenten des Klebers wie auch des bei den bekannten Fahrzeughimmeln verwendeten lösungsmittelhaltigen Bindemittels vollständig beseitigt.

Die erfindungsgemäße Verwendung einer Mischung aus teilverstreckten Polyesterfasern und Polyester-Hochbauschfasern ermöglicht im besonderen eine vereinfachte Fertigung, bei der die Ausformung der Formschale zusammen mit ihrer Kaschierung in einem Verfahrensschritt durchführbar ist und wobei ein voll tiefziehfähiges Teil vorgegeben wird. Ohne Schwierigkeiten ist es möglich, Schaumstoffhinterlegungen des Kaschiermaterials an gewünschten Stellen durchzuführen. Besonders vorteilhaft ist es, wenn die Mischung des verwendeten Wirrfaservlieses zur Herstellung der selbsttragenden Deckenauskleidung aus 30 bis maximal 90 % teilverstreckten Polyesterfasern besteht, wobei der restliche Anteil der Mischung durch Polyester-Hochbauschfasern ergänzt ist. Damit lassen sich Formschalen eines Flächengewichtes zwischen 40 bis 1200 g/qm, vorzugsweise von 1000 g/qm, herstellen. Ein besonders günstiger Anteil an verstreckten Fasern liegt bei 70 % in der Mischung. Je nach partieller Belastung oder Beanspruchung der Formschale kann deren Dicke bereichsweise variiert werden, so etwa dort, wo besondere Belastungen auftreten können, entsprechende Verstärkungen aufweisen.

Entlang der Kantenstruktur, also der Randkante der Formschale, ist in gleichbleibendem Abstand zu dieser in die Fahrzeughimmel jeweils eine umlaufende Biegerille eingebracht, so daß dieser Randkantenbereich um 180° umgelegt bzw. umgebugt werden kann, so daß sich ein umlaufender Randkantenwulst ergibt. Die Dachkonstruktion des Personenkraftwagens kann entsprechend so ausgeführt sein, daß diese umlaufende Wulst kraft- und formschlüssig in den entsprechenden Karosserieteil eingefügt und damit entnehmbar befestigt werden kann.

Das Verfahren zur Herstellung der erfindungsgemäßen Deckenauskleidungen kennzeichnet sich durch mehrere Verfahrensschritte, nämlich zunächst die Herstellung von Faservliesmatten aus 30 bis 90 % teilverstreckten Polyesterfasern und 10 bis 70 % Polyester-Hochbauschfasern, wobei ein Flächengewicht zwischen 40 bis 1200 g/qm, vorzugsweise 1000 g/qm, vorgegeben wird. Ohne daß irgendein Bindemittel oder dergl. lösungsmittelhaltiger Zusatz dem Wirrfaservlies hinzugegeben wird, ist dessen Stabilisierung dadurch gewährleistet, daß nach Herstellung des Faservlieses, beispielsweise durch Aufrieseln auf ein laufendes Transportband, vorzugsweise mehrere solcher Vliese zu einer Vliesmatte vernadelt werden, deren Dicke zwischen 15 bis 20 mm betragen sollte. Durch die Vernadelung ergibt sich eine ausreichende transportfähige Stabilität, die bis zum Ausformvorgang den Wirrfaserverbund garantiert. Aus der Faservliesmatte werden dann der Kontur der Formschale entsprechende Zuschnitte ausgeschnitten, was vorteilhaft zusammen mit der Kaschierung erfolgen kann. Auch ein getrennter Ausschnitt von Kaschierung einerseits und Faservlieszuschnitt andererseits ist denkbar. Nachfolgend wird im Verfahrensablauf bei Übereinanderanordnung des Kaschierzuschnittes und des Faservlieszuschnittes die Doppelschichtanordnung in einem geschlossenen Werkzeug verpreßt, wofür nur eine sehr geringe Gesamtflächenpressung erforderlich ist bei relativ niedrigen Temperaturen, die im vorliegenden Verfahren zwischen 90 und 180 °C liegen. Die ursprünglichen klebenden Eigenschaften der Polyesterfasern werden bei diesem Preßvorgang beseitigt, d.h. die teilverstreckten Fasern verlieren irreversibel ihre Klebrigkeit.

Anhand der beiliegenden Zeichnungen soll die vorliegende Erfindung näher erläutert werden, die eine vorteilhafte Ausbildung für die Herstellung der Deckenauskleidung in vereinfachter Form wiedergeben.
- Fig. 1: zeigt in perspektivischer Schnittdarstellung den Blick auf die Unterseite einer erfindungsgemäßen Deckenauskleidung; die
- Fig. 2 und 3: erläutern in gleicher Darstellung das Umbugen mit Hilfe einer als eine Art plastisches Gelenk ausgebildeten Randkante der Formschale.

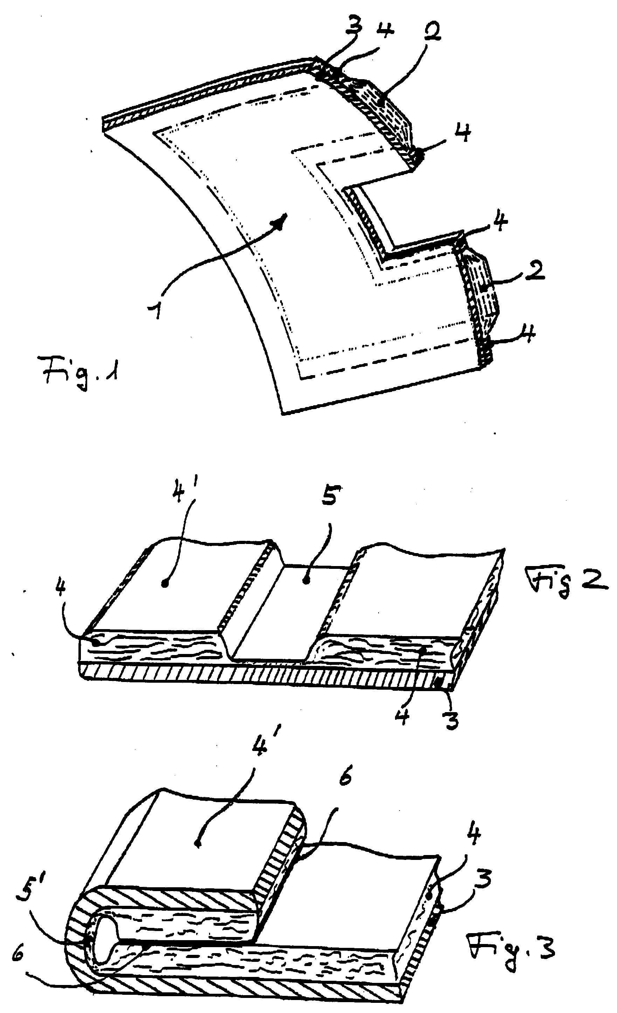

Wie in Fig. 1 dargestellt, ist die Deckenauskleidung 1 wesentlich durch eine verpreßte Faservliesmatte 2 mit einer Verdichtung, die der Hauptfläche der Formschale zugeordnet ist, gekennzeichnet. Der umlaufende Randbereich 4, sowohl bezüglich der Formschalen-Außenkontur als auch im gegebenenfalls vorgesehenen Schiebedachbereich, erhält zusätzliche Stabilität durch eine Zone 4 mit höherer Verdichtung, deren Verlauf gestrichelt verdeutlicht ist. Die Sichtseite der Deckenauskleidung 1 ist durch die festhaftende dekorative Kaschierung abgedeckt, die in einem Arbeitsgang mit der Herstellung der Formschale aufgebracht und mit Hilfe der temporären Klebefähigkeit der teilverstreckten Polyesterfasern fixiert wird.

Fig. 2 zeigt eine Formschale mit umlaufendem Randbeschnitt. Beim Umbugen, also dann, wenn die Kaschierung um die Formschalenkanten herumgelegt wird, kann im Bereich bzw. der Zone 4 mit der größeren Verdichtung eine Randzone 4′ durch eine Art plastisches Gelenk 5, d.h. durch eine Zone größerer Zusatzverdichtung, abgetrennt werden. Das "plastische Gelenk" 5, das etwa doppelt so breit ist wie die Dicke der Verdichtungszone 4, ermöglicht dann das Umbugen der Randzone 4′ in der in Fig. 3 dargestellten Weise, vorzugsweise unter Verwendung eines Zusatzklebers 6. So ergibt sich durch den Umbugvorgang ein umlaufender Randwulst, den man vorteilhaft zur formschlüssigen Verbindung der Deckenauskleidung am Fahrzeug verwenden kann. Eine derartige Schnappverbindung ermöglicht ein gegebenenfalls nachträgliches Lösen und Entfernen des Deckenteils, wobei diese Verbindung zugleich in der Lage ist, Fertigungstoleranzen auszugleichen.

Wird die Zone 4 abgestuft verdichtet, so ist auch ein Umbug möglich, der etwa bündig mit den Nachbarbereichen der Zone 4 verläuft.

Die Wirrfaservliesmatten für die Herstellung der erfindungsgemäßen Deckenauskleidung können vorteilhaft auch in einem einzigen Streuvorgang in der vorgesehenen Dicke (15 bis 20 mm) gestreut und anschließend dieses einschichtige Vlies vernadelt werden. Es kann jedoch auch gewünscht sein, mehrere dünne Einzelvliese zu schütten und diese nachfolgend zu einer Gesamtmatte zu vernadeln. In einzelnen Fällen ergeben sich hierdurch besondere Vorteile, nämlich:
1) bei begrenzter Anlagenkapazität eine dennoch große Mannigfaltigkeit,
2) bei dem Einbau anderer Fasersorten in die Vliesmatte, wenn die Streucharakteristiken der Fasern sehr unterschiedlich sind, eine entsprechende Variationsbreite und dann, wenn
3) in einzelnen Schichten Zusatzappreturen verwendet werden sollen, beispielsweise bei der Absicht, Deckschichten der Matte mit Sondereigenschaften zu erhalten, hierfür genaue Dosiermöglichkeiten.

Ein besonderer Vorteil der erfindungsgemäßen Formschalen ist ihre Recyclingfähigkeit. Da die teilverstreckten Polyesterfasern trotz ihrer temporären Bindeeigenschaften Faserstruktur behalten, lassen sich die Formschalen im Reißwolf wieder zu Fasern recyceln, vor allem dann, wenn auch die Kaschierung aus Fasern (Geweben) besteht.

Eine besonders leichte, günstige Flächendichte des Vlieses für die Holzfasermatte liegt bei einem Wert von 40 g/qm mit 40 % teilverstreckten Polyesterfasern und 60 % Viscose, also Bauschfaseranteil.

## Patentansprüche

1. Deckenauskleidung (1), die als selbsttragende einstückige Formschale ausgebildet ist, die als Fahrzeughimmel an der Dachkonstruktion der Karosserie eines Personenkraftwagens befestigbar ist und die durch Verpressen einer Wirrfaservliesmatte durch Beaufschlagung mit Druck bei erhöhter Temperatur hergestellt ist, wobei das Flächengewicht der Formschale zwischen 600 bis 1200 g/qm liegt und die Dicke zwischen 1 bis 10 mm beträgt,
dadurch **gekennzeichnet**,
daß das Wirrfaservlies aus einer Mischung von wenigstens 30 % bis maximal 90 % teilverstreckten Polyesterfasern mit zu 100 % ergänzten Anteilen an Polyester-Hochbauschfasern besteht, und daß die Formschale auf ihrer einen sichtseitigen Oberfläche ohne die Verwendung von Zusatzkleber kaschiert ist.

2. Deckenauskleidung nach Anspruch 1, dadurch gekennzeichnet, daß das Flächengewicht der Formschale bei 1000 g/qm liegt.

3. Deckenauskleidung nach Anspruch 1, dadurch gekennzeichnet, daß der teilverstreckte Faseranteil 70 % beträgt.

4. Deckenauskleidung nach Anspruch 1, dadurch gekennzeichnet, daß die Wanddicke der Formschale über deren Fläche gesehen variiert.

5. Deckenauskleidung nach Anspruch 1 bis 4, dadurch gekennzeichnet, daß die Verdichtung der Formschale in den Bereichen ihrer Befestigungselemente größer als in anderen Bereichen ist.

6. Deckenauskleidung nach Anspruch 1 bis 5, dadurch gekennzeichnet, daß die Formschale rückseitig entlang ihrer Kantenstruktur im Abstand zur Randlinie eine Biegerille aufweist, die als "plastisches Gelenk" ein Umlegen des Randes (Umbugen) ermöglicht.

7. Verfahren zur Herstellung einer Deckenauskleldung nach Anspruch 1 und mindestens einem der Unteransprüche 2 bis 6, **dadurch gekennzeichnet**, daß
a) Faservliese aus 30 bis 90 % teilverstreckten Polyesterfasern und 10 bis 70 % Polyester-Hochbauschfasern mit einem Flächengewicht zwischen 40 bis 1200 g/qm durch Aufrieseln hergestellt werden, daß
b) mindestens eines dieser Wirrfaservliese durch Verradeln bindemittelfrei zu einer Matte stabilisiert wird, wobei die Mattendicke bei 15 bis 20 mm liegt, daß
c) anschließend ein der Formschale entsprechender Zuschnitt der Faservliesmatte zusammen mit der Kaschierung hergestellt wird, daß
d) der Faservlieszuschnitt gemeinsam mit dem Kaschierzuschnitt in einem geschlossenen Preßwerkzeug mit geringer Gesamtflächenpressung bei einer Temperatur zwischen 90 und 180 °C verpreßt wird und hierbei die bis dahin klebenden Eigenschaften der teilvertreckten Fasern irreversibel beseitigt werden.

8. Verfahren nach Anspruch 7, dadurch gekennzeichnet, daß mit der Verpressung des Faservlieszuschnittes ein umrißparalleles plastisches Umklappgelenk durch entsprechend linienförmige Verdichtung in die Formschale eingebracht wird.

9. Verfahren nach Anspruch 7 und 8, dadurch gekennzeichnet, daß das plastische Gelenk in die Forni einer UmbugRandkante gebracht wird, wobei die entstehende Randwulst für den Formschlußeinbau der Deckenauskleidung innerhalb der Dachkonstruktion der Karosserie benutzt wird.

## Claims

1. Roof lining (1), designed as a self-supporting one-piece moulded shape and mounted as a vehicle roof to the roof structure of the body of a motor vehicle and manufactured by compression of a coarse-fibre-fleece mat by applying a pressure at increased temperature, in which respect the surface weight of the moulded shape is between 600 and 1,200 g/m² and the thickness is between 1 and 10 mm, **characterised in that** the coarse-fibre fleece is a mixture of at least 30% to maximum 90% partially drawn polyester fibres with up to 100% replenished highly padded polyester fibres, and that the moulded shape is on its one visible side laminated without the use of additional adhesives.

2. Roof lining according to claim 1, **characterised** **in that** the surface weight of the moulded shape is approximately 1,000 g/m².

3. Roof lining according to claim 1, **characterised** **in that** the proportion of partially drawn fibre is 70%.

4. Roof lining according to claim 1, **characterised** **in that** the wall thickness of the moulded shape varies as seen over the entire area.

5. Roof lining according to claims 1 to 4, **cha****racterised in that** the density of the moulded shape is greater in the areas of its fixing elements than in the other areas.

6. Roof lining according to claim 1 to 5, **charac****terised in that** the moulded shape comprises at its rear along its edge structure and at a distance from the edge line a bending groove which serves as a "plastic hinge" and permits folding of the edge (beading).

7. Process for the manufacture of a roof lining according to claim 1 and at least one of the subclaims 2 to 6, **characterised in that**
a) the fibre fleece is manufactured of between 30 and 90% partially drawn polyester fibres and between 10 and 70% highly padded polyester fibres having a surface weight of between 40 and 1,200 g/m² by trickling;
b) at least one of the coarse-fibre fleeces are stabilized into a bonding-agent-free mat by pinning, and that the mat thickness is between 15 and 20 mm;
c) subsequently a cut-out of the fibre-fleece mat which matches the mould is made together with the laminate;
d) that the fibre-fleece cut-out is compressed together with the laminate cut-out in a sealed compression tool with low overall-surface pressure at a temperature between 90 and 180°C whilst irreversibly removing sofar present adhesive properties of the partially drawn fibres.

8. Process according to claim 7, **characterised in** **that** during compression of the fibre-fleece cutout an outline-parallel plastic flap hinge is fitted into the moulded shape by respective linear compression.

9. Process according to claim 7 and 8, **character****ised in that** the plastic hinge is positioned in the form of a beading edge and that a thus formed edge bead is used for flush fitting of the roof lining within the roof structure of a vehicle body.

## Revendications

1. Garniture de plafond constituée d'une coque autoporteuse moulée en une pièce, qui peut se fixer comme habillage de plafond sur le pavillon de la carrosserie d'une automobile et qui est fabriquée par moulage par injection sous pression à température élevée, d'une natte non tissée en fibres embouillées, le poids de la coque étant situé entre 600 et 1200 g/m² et l'épaisseur variant entre 1 et 10 mm, caractérisée en ce que le non tissé en fibres embouillées est constitué d'un mélange d'au moins 30 % à au plus 90 % de fibres polyester partiellement étirées, avec des compléments à 100 % en fibres polyester à fort gonflement, et en ce que la coque est stratifiée sur sa première face côté jour sans utilisation d'une colle supplémentaire.

2. Garniture de plafond selon la revendication 1, caractérisée en ce que le poids de la coque moulée est situé autour de 1000 g/m².

3. Garniture de plafond selon la revendication 1, caractérisée en ce que la part des fibres partiellement étirées est de 70 %.

4. Garniture de plafond selon la revendication 1, caractérisée en ce que l'épaisseur de paroi de la coque moulée varie en différentes zones de sa surface.

5. Garniture de plafond selon l'une quelconque des revendications 1 à 4, caractérisée en ce que la densité de la coque moulée est plus importante au niveau de ses éléments de fixation que dans ses autres zones.

6. Garniture de plafond selon l'une quelconque des revendications 1 à 5, caractérisée en ce que la coque de moulage présente sur son verso, le long de son pourtour et à une certaine distance de son arête terminale, une rainure de pliage qui permet un rabattement du bord (rebord) par une "articulation plastique".

7. Procédé de fabrication d'une garniture de plafond selon la revendication 1 et l'une au moins des sous-revendications 2 à 6, caractérisé en ce que
a) des non tissés de fibres sont fabriqués par épandage de 30 à 90 % de fibres polyester partiellement étirées et de 10 à 70 % de fibres poyester à fort gonflement, avec un poids compris entre 40 et 1200 g/m²,
b) au moins l'un de ces non tissés en fibres embrouillées est stabilisé par des épingles et sans liant pour obtenir une natte, l'épaisseur de la natte étant de 15 à 20 mm,
c) un gabarit correspondant à la coque est ensuite fabriqué dans la natte en non tissé de fibres en même temps que la stratification,
d) le gabarit en non tissé de fibres est moulé avec le gabarit de stratification dans un outil de moulage fermé, avec une faible pression de surface totale et à une température entre 90 et 180 °C, ce qui élimine définitivement les propriétés jusque la collantes des fibres partiellement étirées.

8. Procédé selon la revendication 7, caractérisé en ce qu'avec le moulage du gabarit en non tissé de fibres, on réalise dans la coque moulée une articulation plastique de rabattement parallèlement au pourtour, au moyen d'une compression en forme de ligne correspondante.

9. Procédé selon les revendications 7 et 8, caractérisé en ce que l'articulation plastique est réalisée sous la forme d'une arête formant un rebord utilisé pour la mise en place de la garniture de plafond, en affectant la forme de l'intérieur du pavillon de la carrosserie.
